# FASCICULE DE BREVET EUROPEEN

(11) **EP 4 011 623 B1**
(45) Date de publication et mention de la délivrance du brevet: **17.09.2025**
(21) Numéro de dépôt: 21217359.5
(22) Date de dépôt: 13.06.2019
(51) Int. Cl.: B32B 37/04, B29D 24/00, B32B 3/00, B64D 11/00

(54) **PANNEAU COMPOSITE**
VERBUNDPANEEL
COMPOSITE PANEL

(30) Priorité: 14.06.2018 FR 1855230
(43) Date de publication de la demande: 15.06.2022
(62) Demande divisionnaire de: 19180083.8
(73) Titulaire: Cath'Air, 33160 Saint-Medard-en-Jalles (FR)
(72) Inventeur: CATHERINEAU, Marie, 33000 Bordeaux (FR); CATHERINEAU, Anne-Sophie, 33000 Bordeaux (FR)
(74) Mandataire: Ipside

(56) Documents cités:
- DE-A1- 102013 214 391
- FR-A1- 2 872 085
- FR-A1- 2 962 362

## Description

### Domaine de l'invention

La présente invention se rapporte au domaine des panneaux composites, notamment destinés au mobilier avion ou nautique.

La présente divulgation concerne un procédé de réalisation d'un panneau composite, et un panneau composite, par exemple obtenu par ledit procédé.

### Etat de la technique

Les panneaux en composite sont désormais couramment utilisés pour le mobilier avion ou le mobilier nautique.

On connaît notamment dans l'état de la technique le brevet français N° FR 2 563 153 B1, qui se rapporte à un panneau composite, notamment destiné au mobilier avion. L'objet de cette invention de l'état de la technique est un panneau composite comprenant une âme centrale formée d'un panneau du type nid d'abeilles revêtu sur ses deux faces d'au moins une couche de tissu préimprégné de résine appropriée, dans lequel au moins l'une des faces dudit panneau ainsi revêtu est recouverte d'un placage de bois mince mis en place par simple pression à chaud, l'ensemble âme central + tissus + placage, étant assemblé et solidarisé au cours d'une seule et même opération.

On connaît également dans l'état de la technique le brevet français N° FR 2 872 085 B1, qui se rapporte à un panneau composite pour mobilier avion. L'objet de cette invention de l'état de la technique est un panneau composite, notamment destiné au mobilier avion, comprenant une âme centrale formée d'un panneau du type nid d'abeilles revêtu sur ses deux faces d'au moins une couche de tissu préimprégné de résine appropriée, au moins l'une des faces dudit panneau étant recouverte d'un placage de bois mince, dans lequel, entre ledit placage de bois mince et ladite couche de tissu préimprégné sont interposées une couche d'une mousse de matière plastique rigide et une seconde couche de tissu préimprégné de résine, la couche de mousse étant interposée entre les deux couches de tissu, l'ensemble étant assemblé et solidarisé sous pression et à chaud au cours d'une seule et même opération.

On connaît également dans l'état de la technique le brevet français N° FR 2 962 362 B1, qui se rapporte à un panneau composite pour mobilier avion. L'objet de cette invention de l'état de la technique est un panneau composite, notamment destiné au mobilier avion, comprenant une âme centrale formée d'un panneau du type nid d'abeilles revêtu sur ses deux faces d'au moins une couche de tissu préimprégné de résine appropriée, au moins l'une des deux faces dudit panneau étant recouverte d'un placage de bois mince, l'ensemble étant assemblé et solidarisé sous pression et à chaud au cours d'une seule et même opération. Selon cette invention de l'état de la technique, entre ledit placage de bois mince et ladite couche de tissu préimprégné est interposé un film d'aluminium, ledit film d'aluminium étant solidarisé sur l'une des faces dudit placage de bois au moyen d'une couche de colle.

Pour certains types de placage poreux, des remontées de résine du tissu préimprégné peuvent apparaître sur la face visible du placage lors de la cuisson en une seule étape décrite dans le brevet N° FR 2 563 153 B1.

### Exposé de l'invention

La présente divulgation entend remédier aux inconvénients de l'art antérieur en proposant un procédé de réalisation d'un panneau composite, notamment destiné au mobilier avion ou nautique, permettant de créer une barrière étanche sur la face en contact avec le matériau préimprégné de résine, tout en minimisant l'impact sur la masse du panneau composite et en assurant un meilleur collage du placage sur le panneau.

A cet effet, la présente divulgation concerne, dans son acception la plus générale, selon un aspect non revendiqué, un procédé de réalisation d'un panneau composite, notamment destiné au mobilier avion ou nautique, ledit panneau composite comportant une âme centrale formée d'un cœur de type matériau structuré à faible densité revêtu sur ses deux faces d'au moins une couche de matériau préimprégné de résine, au moins l'une des faces dudit panneau étant recouverte d'un placage, comportant les deux étapes de fabrication suivantes :
- cuisson dudit placage avec un film de colle, ledit film de colle se collant sur l'une des faces dudit placage ; et
- cuisson dudit placage et du film de colle sur ladite au moins une couche de matériau préimprégné de résine.

Le procédé selon cet aspect de la présente divulgation permet de créer une barrière étanche sur la face en contact avec le matériau préimprégné de résine afin d'éviter les remontées de résine sur des placages.

Le procédé selon cet aspect permet d'assurer une meilleure adhésion du placage sur le sandwich par l'ajout d'un film de colle participant à la tenue du placage sur le panneau composite.

Le procédé selon cet aspect permet de minimiser l'impact sur la masse du panneau composite en ajoutant uniquement un film de colle de part et d'autre du panneau composite.

Il permet un gain de masse de 30 % par rapport aux fabrications traditionnelles où l'assemblage décoratif de couches de placage est rapporté à froid en collage néoprène dans un deuxième temps.

Selon une des variantes de mise en œuvre, l'ajout d'aluminium entre deux films de colle dans le panneau composite permet d'améliorer la rigidité du panneau composite et sa tenue au feu.

Le procédé permet de réaliser des panneaux de structure et des panneaux décoratifs.

Avantageusement, le collage dudit film de colle est réalisé par pression à chaud sur l'une des faces dudit placage.

Selon un mode de réalisation, ledit matériau structuré à faible densité est de type nid d'abeilles.

Selon un autre mode de réalisation, ledit matériau structuré à faible densité est de type mousse.

Selon un mode de réalisation, l'étape de cuisson dudit placage avec ledit film de colle est réalisée à une température comprise entre 110°C et 165°C.

Selon un mode de mise en oeuvre particulier, l'étape de cuisson dudit placage avec ledit film de colle est réalisée à une température comprise entre 110°C et 140°C.

Selon un mode de réalisation, l'étape de cuisson dudit placage avec ledit film de colle est d'une durée comprise entre 20 secondes et 30 minutes.

Selon un mode de mise en oeuvre particulier, l'étape de cuisson dudit placage avec ledit film de colle est d'une durée comprise entre 2 minutes et 10 minutes.

Selon un mode de réalisation, l'étape de cuisson dudit placage avec ledit film de colle est réalisée dans une presse à compression à chaud sous une pression comprise entre 12 et 25 bar.

Selon un mode de réalisation, l'étape de cuisson dudit placage et du film de colle sur ladite au moins une couche de matériau préimprégné de résine est réalisée à une température comprise entre 100°C et 150°C.

Selon un mode de mise en oeuvre particulier, l'étape de cuisson dudit placage et du film de colle sur ladite au moins une couche de matériau préimprégné de résine est réalisée à une température comprise entre 125°C et 135°C.

Selon un mode de réalisation, l'étape de cuisson dudit placage et du film de colle sur ladite au moins une couche de matériau préimprégné de résine est d'une durée comprise entre 20 et 360 minutes.

Selon un mode de mise en oeuvre particulier, l'étape de cuisson dudit placage et du film de colle sur ladite au moins une couche de matériau préimprégné de résine est d'une durée comprise entre 90 et 120 minutes.

Selon un mode de réalisation, l'étape de cuisson dudit placage et du film de colle sur ladite au moins une couche de matériau préimprégné de résine est réalisée dans une presse à compression à chaud sous une pression comprise entre 0.3 et 5 bar.

Selon un autre mode de réalisation, l'étape de cuisson dudit placage et du film de colle sur ladite au moins une couche de matériau préimprégné de résine est réalisée dans une étuve.

Selon un autre mode de réalisation, l'étape de cuisson dudit placage et du film de colle sur ladite au moins une couche de matériau préimprégné de résine est réalisée dans un autoclave.

Selon un mode de réalisation, ledit placage est en bois d'une épaisseur de quelques dixièmes de millimètres.

De préférence, ledit placage en bois est d'une épaisseur comprise entre 0,4 mm et 1 mm.

Selon un mode de réalisation, entre ledit placage et ladite couche de matériau préimprégné est interposé un film d'aluminium d'une épaisseur de quelques dixièmes de millimètres.

De préférence, ledit film d'aluminium est d'une épaisseur comprise entre 0,05 mm et 0,2 mm.

Selon une variante, ledit procédé comporte en outre une étape d'ajout d'un agent imprégnant ignifugeant.

Selon un mode de réalisation, ladite couche de matériau préimprégné est composée de tissus.

Selon un autre mode de réalisation, ladite couche de matériau préimprégné est composée de nappes unidirectionnelles.

Avantageusement, ladite couche de matériau préimprégné est composée de fibres de type dans le groupe suivant : verre, hybrides, carbone, aramide, lin, bambou et chanvre.

La présente invention se rapporte à un panneau composite, notamment destiné au mobilier avion ou nautique, par exemple obtenu par la mise en oeuvre du procédé évoqué ci-dessus.

A cet effet, la présente invention vise un panneau composite tel que défini à la revendication 1.

Des options de réalisation sont définies dans les revendications dépendantes.

Selon un mode de réalisation, ledit panneau composite est plat.

Selon un autre mode de réalisation, ledit panneau composite est en forme.

### Brève description des dessins

On comprendra mieux l'invention à l'aide de la description, faite ci-après à titre purement explicatif, d'un mode de réalisation de l'invention, en référence aux Figures dans lesquelles :
- La Figure 1 illustre le procédé selon la présente divulgation ;
- La Figure 2 représente un panneau composite selon la présente invention ; et
- La Figure 3 représente une variante du panneau composite selon la présente invention.

### Description détaillée de modes de réalisation de l'invention

La présente divulgation, se rapporte à un procédé de réalisation d'un panneau composite 10, notamment destiné au mobilier avion ou nautique, ledit panneau composite 10 comportant une âme centrale 11 formée d'un cœur 12 de type matériau structuré à faible densité revêtu sur ses deux faces d'au moins une couche 13 de matériau préimprégné de résine, au moins l'une des faces dudit panneau 10 étant recouverte d'un placage 14. Le procédé selon la présente divulgation comporte les deux étapes de fabrication suivantes :
- cuisson dudit placage 14 avec un film de colle 15, ledit film 15 de colle se collant sur l'une des faces dudit placage 14 ; et
- cuisson dudit placage 14 et du film de colle 15 sur ladite au moins une couche 13 de matériau préimprégné de résine.

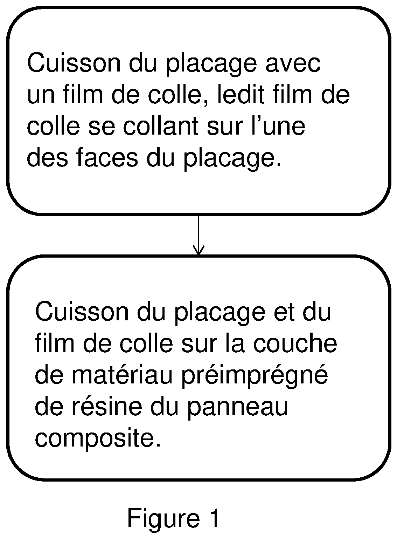

La Figure 1 illustre les différentes étapes du procédé.

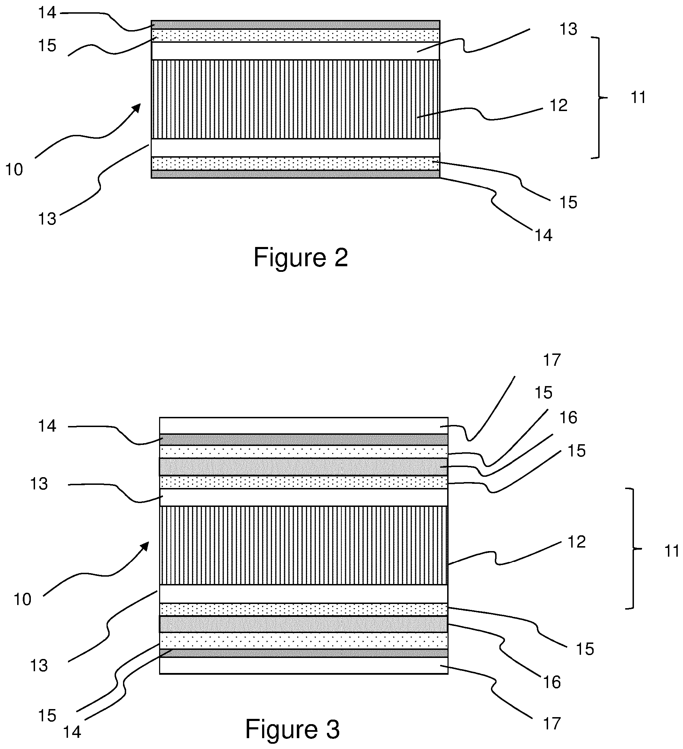

La Figure 2 représente un panneau composite 10 selon la présente invention.

On observe sur la Figure 2 un panneau composite 10 comportant une âme centrale 11 formée d'un cœur 12 de type matériau structuré à faible densité revêtu sur ses deux faces d'au moins une couche 13 de matériau préimprégné de résine, au moins l'une des faces dudit panneau 10 étant recouverte d'un placage 14. On observe également sur la Figure 2 un film de colle 15, ledit film 15 de colle se collant sur l'une des faces dudit placage 14.

La Figure 3 représente une variante du panneau composite selon la présente invention.

On observe sur la Figure 3 un panneau composite 10 comportant une âme centrale 11 formée d'un cœur 12 de type matériau structuré à faible densité revêtu sur ses deux faces d'au moins une couche 13 de matériau préimprégné de résine, au moins l'une des faces dudit panneau 10 étant recouverte d'un placage 14. On observe également sur la Figure 3 un film de colle 15, ledit film 15 de colle se collant sur l'une des faces dudit placage 14. De plus, dans le panneau composite 10 illustré Figure 3, un film d'aluminium 16 est interposé entre ledit placage 14 et ladite couche 13 de matériau préimprégné. Un agent imprégnant ignifugeant 17 est également représenté Figure 3.

Le procédé permet de créer une barrière étanche sur la face en contact avec le matériau préimprégné de résine afin d'éviter les remontées de résine sur les placages.

Le procédé permet également d'assurer un meilleur collage du placage sur le sandwich.

Le procédé permet de réaliser des panneaux de structure et des panneaux décoratifs.

Dans un mode de réalisation, le collage dudit film de colle 15 sur l'une des faces dudit placage 14 est réalisé par pression à chaud.

Le matériau structuré à faible densité peut être de type nid d'abeilles, ou de type mousse.

L'étape de cuisson dudit placage 14 avec le film de colle 15 est réalisée à une température comprise entre 110°C et 165°C, préférentiellement entre 110°C et 140°C, et est d'une durée comprise entre 20 secondes et 30 minutes, préférentiellement entre 2 et 10 minutes.

Dans un mode de réalisation, l'étape de cuisson dudit placage 14 avec ledit film de colle 15 est réalisée dans une presse à compression à chaud sous une pression comprise entre 12 et 25 bar.

L'étape de cuisson dudit placage 14 et du film de colle 15 sur ladite au moins une couche 13 de matériau préimprégné de résine est réalisée à une température comprise entre 100°C et 150°C, préférentiellement entre 125°C et 135°C et est d'une durée comprise entre 20 et 360 minutes, préférentiellement entre 90 et 120 minutes.

Cette étape de cuisson est réalisée soit dans une presse à compression à chaud sous une pression comprise entre 0.3 et 5 bar, soit dans une étuve, ou encore dans un autoclave.

Le placage 14 est en bois d'une épaisseur de quelques dixièmes de millimètres, préférentiellement entre 0,4 mm et 1 mm.

Dans un mode de réalisation, entre ledit placage 14 et ladite couche 13 de matériau préimprégné est interposé un film d'aluminium 16 d'une épaisseur de quelques dixièmes de millimètres, préférentiellement entre 0,05 mm et 0,2 mm.

Dans un mode de réalisation avantageux, ledit procédé comporte en outre une étape d'ajout d'un agent imprégnant ignifugeant 17.

La couche 13 de matériau préimprégné est composée soit de tissus, soit de nappes unidirectionnelles.

La couche 13 de matériau préimprégné est composée de fibres de type dans le groupe suivant : verre, hybrides, carbone, aramide, lin, bambou et chanvre.

La présente invention se rapporte à un panneau composite 10, notamment destiné au mobilier avion ou nautique, par exemple obtenu par la mise en œuvre du procédé évoqué ci-dessus, ledit panneau composite 10 comportant une âme centrale 11 formée d'un cœur 12 de type matériau structuré à faible densité revêtu sur ses deux faces d'au moins une couche 13 de matériau préimprégné de résine, au moins l'une des faces dudit panneau 10 étant recouverte d'un placage 14.

Le panneau composite 10 est soit plat, soit en forme.

L'invention est décrite dans ce qui précède à titre d'exemple. Il est entendu que l'homme du métier est à même de réaliser différentes variantes de l'invention sans pour autant sortir du cadre du brevet.

## Revendications

1. Panneau composite (10), notamment destiné au mobilier avion ou nautique, comportant une âme centrale (11) formée d'un cœur (12) de type matériau structuré à faible densité revêtu sur ses deux faces d'au moins une couche (13) de matériau préimprégné de résine, au moins l'une des faces dudit panneau (10) étant recouverte d'un placage (14), **caractérisé en ce qu'**un film (15) de colle est collé sur l'une des faces dudit placage (14) et sur ladite au moins une couche (13) de matériau préimprégné de résine.

2. Panneau composite (10), notamment destiné au mobilier avion ou nautique, selon la revendication 1, **caractérisé en ce qu'**il est plat.

3. Panneau composite (10), notamment destiné au mobilier avion ou nautique, selon la revendication 1, **caractérisé en ce qu'**il est en forme.

4. Panneau composite (10), notamment destiné au mobilier avion ou nautique, selon l'une des revendications précédentes, **caractérisé en ce qu'**entre ledit placage (14) et ladite couche (13) de matériau préimprégné est interposé un film d'aluminium (16) d'une épaisseur de quelques dixièmes de millimètres.

5. Panneau composite (10), notamment destiné au mobilier avion ou nautique, selon la revendication 4, **caractérisé en ce que** ledit film d'aluminium (16) est d'une épaisseur comprise entre 0,05 mm et 0,2 mm.

6. Panneau composite (10), notamment destiné au mobilier avion ou nautique, selon l'une des revendications 4 ou 5, **caractérisé en ce que** l'aluminium est ajouté entre deux films de colle.

7. Panneau composite (10), notamment destiné au mobilier avion ou nautique, selon l'une des revendications précédentes, **caractérisé en ce que** ledit matériau structuré à faible densité (12) est de type nid d'abeilles.

8. Panneau composite (10), notamment destiné au mobilier avion ou nautique, selon l'une des revendications 1 à 6, **caractérisé en ce que** ledit matériau structuré à faible densité (12) est de type mousse.

9. Panneau composite (10), notamment destiné au mobilier avion ou nautique, selon l'une des revendications précédentes, **caractérisé en ce que** ladite couche (13) de matériau préimprégné est composée de tissus.

10. Panneau composite (10), notamment destiné au mobilier avion ou nautique, selon l'une des revendications 1 à 8, **caractérisé en ce que** ladite couche (13) de matériau préimprégné est composée de nappes unidirectionnelles.

11. Panneau composite (10), notamment destiné au mobilier avion ou nautique, selon l'une des revendications 1 à 10, **caractérisé en ce que** ladite couche (13) de matériau préimprégné est composée de fibres de type dans le groupe suivant : verre, hybrides, carbone, aramide, lin, bambou et chanvre.

12. Panneau composite (10), notamment destiné au mobilier avion ou nautique, selon l'une des revendications précédentes, **caractérisé en ce qu'**il comporte en outre un agent imprégnant ignifugeant (17).

## Patentansprüche

1. Verbundplatte (10), insbesondere für Flugzeug- oder Bootsmöbel, mit einem zentralen Kern (11), der aus einem Kern (12) vom Typ strukturiertes Material mit geringer Dichte gebildet ist, der auf seinen beiden Seiten mit mindestens einer Schicht (13) aus vorimprägniertem Harzmaterial beschichtet ist, wobei mindestens eine der Seiten der Platte (10) mit einem Furnier (14) bedeckt ist, **dadurch gekennzeichnet, dass** auf eine der Seiten des Furniers (14) und auf die mindestens eine Schicht (13) aus vorimprägniertem Harzmaterial ein Klebstofffilm (15) geklebt ist.

2. Verbundplatte (10), insbesondere für Flugzeug- oder Bootsmöbel, nach Anspruch 1, **dadurch gekennzeichnet, dass** sie flach ist.

3. Verbundplatte (10), insbesondere für Flugzeug- oder Bootsmöbel, nach Anspruch 1, **dadurch gekennzeichnet, dass** sie geformt ist.

4. Verbundplatte (10), insbesondere für Flugzeug- oder Bootsmöbel, nach einem der vorhergehenden Ansprüche, **dadurch gekennzeichnet, dass** zwischen dem Furnier (14) und der Schicht (13) aus vorimprägniertem Material eine Aluminiumfolie (16) mit einer Dicke von einigen Zehntelmillimetern eingelegt ist.

5. Verbundplatte (10), insbesondere für Flugzeug- oder Bootsmöbel, nach Anspruch 4, **dadurch gekennzeichnet, dass** die Aluminiumfolie (16) eine Dicke zwischen 0,05 mm und 0,2 mm hat.

6. Verbundplatte (10), insbesondere für Flugzeug- oder Bootsmöbel, nach einem der Ansprüche 4 oder 5, **dadurch gekennzeichnet, dass** zwischen zwei Klebstofffolien Aluminium hinzugefügt wird.

7. Verbundplatte (10), insbesondere für Flugzeug- oder Bootsmöbel, nach einem der vorhergehenden Ansprüche, **dadurch gekennzeichnet, dass** das strukturierte Material mit geringer Dichte (12) vom Wabenstrukturtyp ist.

8. Verbundplatte (10), insbesondere für Flugzeug- oder Bootsmöbel, nach einem der Ansprüche 1 bis 6, **dadurch gekennzeichnet, dass** das strukturierte Material (12) mit geringer Dichte vom Schaumstofftyp ist.

9. Verbundplatte (10), insbesondere für Flugzeug- oder Bootsmöbel, nach einem der vorhergehenden Ansprüche, **dadurch gekennzeichnet, dass** die Schicht (13) aus vorimprägniertem Material aus Stoffen besteht.

10. Verbundplatte (10), insbesondere für Flugzeug- oder Bootsmöbel, nach einem der Ansprüche 1 bis 8, **dadurch gekennzeichnet, dass** die Schicht (13) aus vorimprägniertem Material aus unidirektionalen Bahnen besteht.

11. Verbundplatte (10), insbesondere für Flugzeug- oder Bootsmöbel, nach einem der Ansprüche 1 bis 10, **dadurch gekennzeichnet, dass** die Schicht (13) aus vorimprägniertem Material aus Fasern der folgenden Gruppe besteht: Glas, Hybride, Kohlenstoff, Aramid, Leinen, Bambus und Hanf.

12. Verbundplatte (10), insbesondere für Flugzeug- oder Bootsmöbel, nach einem der vorhergehenden Ansprüche, **dadurch gekennzeichnet, dass** sie ferner ein feuerhemmendes Imprägniermittel (17) enthält.

## Claims

1. Composite panel (10), in particular intended for aircraft or nautical furniture, including a central core (11) formed from a core (12) of a low-density structured material type covered on each of its two faces with at least one layer (13) of material impregnated with resin, at least one of the faces of said panel (10) being covered with a veneer (14), **characterised in that** a film (15) of glue is glued on one of the faces of said veneer (14) and on said at least one layer (13) of material pre-impregnated with resin.

2. Composite panel (10), in particular intended for aircraft or nautical furniture, according to claim 1, **characterised in that** it is flat.

3. Composite panel (10), in particular intended for aircraft or nautical furniture, according to claim 1, **characterised in that** it is in shape.

4. Composite panel (10), in particular intended for aircraft or nautical furniture, according to one of the preceding claims, **characterised in that**, between said veneer (14) and said layer (13) of preimpregnated material, a film of aluminium (16) with a thickness of a few tens of millimetres is interposed.

5. Composite panel (10), in particular intended for aircraft or nautical furniture, according to claim 4, **characterised in that** said film of aluminium (16) has a thickness of between 0.05 mm and 0.2 mm.

6. Composite panel (10), in particular intended for aircraft or nautical furniture, according to one of claims 4 or 5, **characterised in that** the aluminium is added between two films of glue.

7. Composite panel (10), in particular intended for aircraft or nautical furniture, according to one of the preceding claims, **characterised in that** said low-density structured material (12) is of the honeycomb type.

8. Composite panel (10), in particular intended for aircraft or nautical furniture, according to one of claims 1 to 6, **characterised in that** said low-density structured material (12) is of the foam type.

9. Composite panel (10), in particular intended for aircraft or nautical furniture, according to one of the preceding claims, **characterised in that** said layer (13) of preimpregnated material is composed of fabrics.

10. Composite panel (10), in particular intended for aircraft or nautical furniture, according to one of claims 1 to 8, **characterised in that** layer (13) of preimpregnated material is composed of unidirectional sheets.

11. Composite panel (10), in particular intended for aircraft or nautical furniture, according to one of claims 1 to 10, **characterised in that** said layer (13) of preimpregnated material is composed of fibres of a type in the following group: glass, hybrids, carbon, aramid, linen, bamboo and hemp.

12. Composite panel (10), in particular intended for aircraft or nautical furniture, according to one of the preceding claims, **characterised in that** it furthermore includes a flame-retarding impregnating agent (17).
